Europäisches Patentamt

European Patent Office

Office européen des brevets

(11) Veröffentlichungsnummer: **0 511 608 A1**

## (12) EUROPÄISCHE PATENTANMELDUNG

(21) Anmeldenummer: **92107115.5**

(22) Anmeldetag: **25.04.92**

(51) Int. Cl.5: **A22C 11/08**, F16J 15/00

(30) Priorität: **27.04.91 DE 4113807**

(43) Veröffentlichungstag der Anmeldung:
**04.11.92 Patentblatt 92/45**

(84) Benannte Vertragsstaaten:
**AT CH DE DK ES FR GB IT LI NL SE**

(71) Anmelder: **VEMAG Maschinenbau GmbH
Weserstrasse 32
W-2810 Verden (Aller)(DE)**

(72) Erfinder: **Markwardt, Klaus
Höfestrasse 3b
W-3014 Laatzen(DE)**

(74) Vertreter: **Eisenführ, Speiser & Partner
Martinistrasse 24
W-2800 Bremen 1(DE)**

(54) **Zubringeinrichtung in einem Beschickungsbehälter, insbesondere für eine Wurstfüllmaschine.**

(57) Es wird eine Zubringeinrichtung in einem Beschickungsbehälter einer Wurstfüllmaschine beschrieben, bei der eine Zubringkurve (2) an einem Drehkranz (1) befestigt ist, der wiederum in einem mit einem Zahnkranz (10) versehenen Wälzlager (3) gelagert ist. Die Abdichtung an dem Drehkranz (1), die ein Übertreten von Schmierfett aus einem Drehantriebsraum (8) in einen Produktraum (7) sowie von Wurstmasse in umgekehrter Richtung verhindern soll, ist durch jeweils mindestens zwei oberhalb und unterhalb des Drehkranzes (1) beabstandet angeordnete Dichtungen gekennzeichnet. Zwischen diesen Dichtungen kann sich weiterhin ein Spülraum bzw. Sperrfettraum (13) befinden, mit dem die Zuverlässigkeit der Abdichtung weiter erhöht wird und über den gleichzeitig die Dichtungen gefettet werden können.

Die Erfindung betrifft eine Zubringeinrichtung in einem Beschickungsbehälter, insbesondere für eine Wurstfüllmaschine mit einer Zubringkurve, die an einem Drehkranz befestigt ist, welcher seinerseits in einem Wälzlager gelagert ist und auf der Ober- und Unterseite jeweils eine Dichtung aufweist.

Bei Wurstfüllmaschinen wird das Brät (Wurstmasse) in einen auf der Maschine befindlichen Beschickungsbehälter bzw. -trichter eingebracht. Von dort gelangt es zu einem Förderer, der vorzugsweise als Doppelschraubenspindelpumpe ausgebildet ist. Der vordere Abschnitt dieser Pumpe dient zum weiteren Transport des Bräts in ein Füllrohr, der hintere Abschnitt wird einem in weitem Bereich (0-99%) einstellbaren Vakuum ausgesetzt ("Vakuum-Wurstfüllmaschine"). Durch das Vakuum wird das Brät vor der Abfüllung evakuiert, wodurch bewirkt wird, daß eine portionsgenauere und kompaktere Abfüllung möglich ist und eine schönere Fleischfarbe und längere Lagerfähigkeit erzielt werden.

Durch die erwähnte Ausführung der Wurstfüllmaschine mit einem Beschickungsbehälter ist ein kontinuierlicher Arbeitsprozeß gewährleistet, da keine Füllpausen notwendig sind. Das Brät kann vielmehr laufend in den in verschiedenen Größen verfügbaren Beschickungsbehälter nachgefüllt werden.

Über das Füllrohr gelangt das Brät schließlich in entsprechende Wurstdärme. An einer Portionssteuerung kann das Gewicht der abzufüllenden Portionen eingestellt werden. Ist das Gewicht erreicht, wird der Darm mit einer einstellbaren Anzahl von Drehungen eines Abdrehgetriebes unter Bildung einer Wurst geschlossen.

Alternativ kann das Brät oder ähnliche Produkte auch in Gläsern oder Dosen abgefüllt werden, das Abdrehgetriebe kann dazu leicht entfernt werden.

Da das Brät im allgemeinen eine mehr oder weniger zähe und hochviskose Masse ist, sind insbesondere bei kontinuierlichen Wurstfüllmaschinen (z.B. Vakuumfüllmaschinen) innerhalb des Beschickungsbehälters in seinem unteren Bereich Zubringeinrichtungen erforderlich, mit denen die zu fördernde Masse den am Ausgang des kegeligen Behälters plazierten Förderelementen zugeführt wird. Üblicherweise wird dazu eine sogenannte Zubringkurve, auch Zubringschnecke genannt, verwendet, die an einem Teil ihrer äußeren kegelförmigen Fläche mit einem antreibbaren Drehkranz verbunden ist. Insbesondere bei Vakuum-Wurstfüllmaschinen wird dabei eine stabile Lagerung und eine hygienisch einwandfreie Ausführung benötigt.

Im wesentlichen haben sich zwei Ausführungsformen durchgesetzt:

a) Die Zubringkurve ist drehfest mit einem in einem Gleitlager gelagerten Drehkranz verbunden. Von dem Gleitlager wird der Drehkranz radial geführt, während die axialen Kräfte von Gleitringen aufgenommen werden, mit denen auch eine Abdichtung gegenüber ortsfesten oberen und unteren Teilen des kegelförmigen Beschickungsbehälters erreicht wird. Der obere Behälterteil (oberhalb des Drehkranzes) ist dabei im allgemeinen wegschwenkbar, so daß der Drehkranz mit der Zubringkurve sowie die Gleitringe herausgenommen werden können. Diese Teile lassen sich folglich zwar sehr gut reinigen, es besteht jedoch der Nachteil, daß eine spielfreie Lagerung im Interesse einer leichten Herausnehmbarkeit nicht ausführbar ist. Durch dieses Spiel in der Verzahnung werden insbesondere beim Anfahren der Maschine störende Geräusche erzeugt sowie ein erhöhter Verschleiß und damit eine höhere Reparaturanfälligkeit verursacht. Schließlich ist auch der Durchtritt von Wurstmasse bis hin zum Drehantrieb nicht ganz zu vermeiden und unangenehm ist schließlich das in der Praxis recht hohe Gewicht des kompletten Drehkranzes.

b) Bei einer alternativen, bekannten Zubringeinrichtung ist die Zubringkurve zwar ebenfalls drehfest mit dem Drehkranz verbunden, dieser wiederum jedoch nahezu spielfrei in einem Wälzlager gelagert. Infolge dieser Wälzlagerung ist eine solche Zubringeinrichtung während der Reinigungsarbeiten für eine Bedienperson nicht herausnehmbar. Die Reinigung muß also im Beschickungsbehälter erfolgen. Die Abdichtung zwischen dem Produktraum des Beschickungsbehälters und einem mit Fett gefüllten Drehantriebsraum wird dabei mit je einem speziellen Dichtring auf der Ober- und der Unterseite des Drehkranzes erzielt. Der mechanische Aufbau dieser Ausführung ist zwar sehr stabil, nahezu spielfrei und damit auch geräuscharm. Er hat jedoch den Nachteil, daß Leckagen an dem Dichtring zu einem direkten Kontakt zwischen Brät und dem Fett bzw. Schmierstoff des Drehantriebes führen. Ein Schmierstoffaustritt in den Produktraum kontaminiert folglich die Wurstmasse, während umgekehrt durch Eintritt der Wurstmasse in den Schmierraum eine ungewollte Langzeit-Produktablagerung mit entsprechender Keimbildung verursacht wird.

Der Erfindung liegt die Aufgabe zugrunde, eine Zubringeinrichtung in einem Beschickungsbehälter einer Wurstfüllmaschine mit einer an einem Drehkranz befestigten Zubringkurve zu schaffen, bei der die Gefahr der Verschmutzung des geförderten Produktes mit Schmiermitteln weitgehend beseitigt ist.

Die Lösung dieser Aufgabe ist im Patentanspruch 1 angegeben.

Erfindungsgemäß sind also jeweils mindestens zwei in Relation zum Drehkranz obere und untere, voneinander radial beabstandete Dichtungen vorgesehen.

Vorteilhaft bei dieser Lösung ist der sehr stabile und nahezu spielfreie mechanische Aufbau, der dazu führt, daß die Zubringeinrichtung geräuscharm sowie mit wesentlich vermindertem Verschleiß arbeitet. Gleichzeitig ist eine leichte Handhabung bzw. Reinigung möglich, ohne daß Teile entfernt werden müssen. Schließlich wird auch zuverlässig verhindert, daß Produktmasse in den Schmierraum eintreten kann.

Vorteilhafte Ausgestaltungen des Erfindungsgedankens sind in den Unteransprüchen angegeben.

Bei einer bevorzugten Ausführungsform sind die oberen Dichtungen in den Drehkranz und die unteren Dichtungen in ein Trichterunterteil eingelassen.

Die oberen und unteren Dichtungen können als Gleitring- oder als Lippen-Dichtungen ausgebildet sein und ermöglichen so eine relativ leichte Drehung des Drehkranzes über ein Antriebsritzel und einen Zahnkranz, der in einem Wälzlager ruht und an dem der Drehkranz befestigt ist.

In einer bevorzugten Ausführungsform sind jeweils zwei obere und zwei untere Dichtungen vorgesehen. Der radiale Zwischenraum zwischen den Dichtungen ist als Spülraum bzw. Sperrfettraum ausgebildet, der mit Lebensmittelfett gefüllt ist. Dieses Lebensmittelfett wird über einen Schmiernippel o. dgl. zugeführt und erneuert und dient sowohl zum Fetten der Dichtungen als auch als Barriere für das Schmierfett des Drehantriebsraums und für die geförderte Wurstmasse. Der Spülraum ist an einen Fettaustritt angeschlossen.

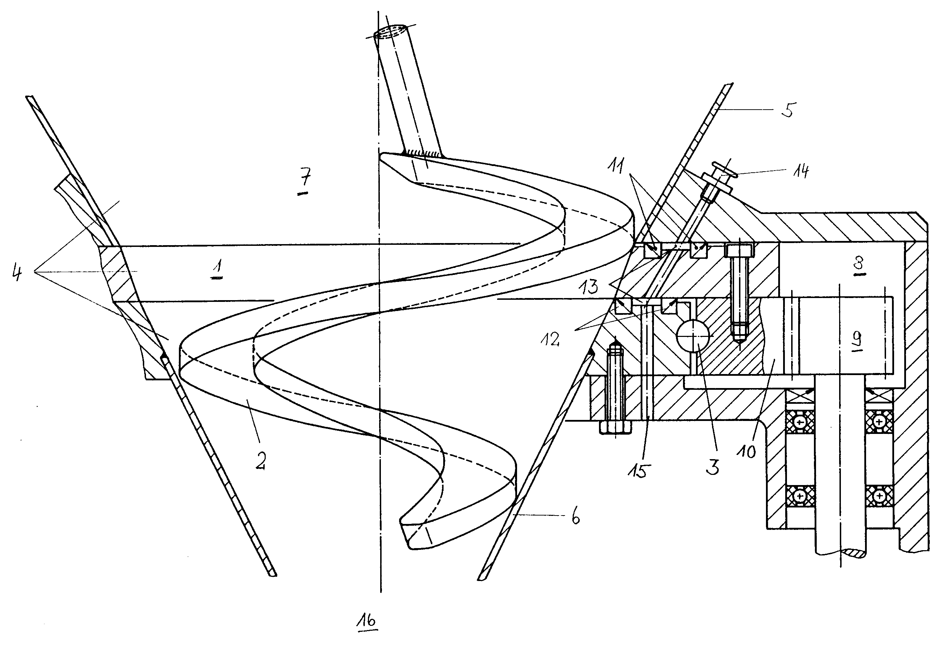

Weitere Einzelheiten und Vorteile der Erfindung ergeben sich aus der nachfolgenden Beschreibung eines Ausführungsbeispieles anhand der Zeichnung. Bei ihr handelt es sich um eine schematische Querschnittsdarstellung des unteren Teiles eines Beschickungstrichters mit einer erfindungsgemäßen Zubringeinrichtung.

Die dargestellte bevorzugte Ausführungsform weist einen Drehkranz 1 zwischen einem aus Trichteroberteil 5 und Trichterunterteil 6 gebildeten Beschickungstrichter 4 auf. Im Inneren dieses Trichters befindet sich eine Zubringkurve 2, die auch als Zubringschnecke bezeichnet wird. Die Wurstmasse (Brät) wird in dieser Zeichnung von oben in einen Produktraum 7 des Trichters eingefüllt und nach unten zu einem Behälteraustritt 16 gefördert, wo sich entsprechende Förderkurven anschließen. Die Zubringkurve 2 ist an dem Drehkranz 1 befestigt, der über ein Antriebsritzel 9 sowie einen in einem Wälzlager 3 ruhenden Zahnkranz 10 angetrieben wird. Die Befestigung des Drehkranzes 1 an dem Wälzlager 3 kann z.B. durch Schrauben erfolgen, so daß bei eventuell notwendigen Wartungs- oder Reparaturarbeiten eine leichte Demontage möglich ist.

Das Antriebsritzel 9, der Zahnkranz 10 und das Wälzlager 3 befinden sich in einem Drehantriebsraum 8. Die Schmierung der beweglichen Teile innerhalb dieses Raumes erfolgt durch ein Maschinen- oder Lebensmittelfett (Schmierfett).

In den Drehkranz 1 sind zwei obere Dichtungen 11 eingelassen, bei denen es sich um Gleitring- oder Lippen-Dichtungen handeln kann. Das untere Auflager (Trichterunterteil 6) des Drehkranzes 1 weist entsprechende unter Dichtungen 12 auf. Durch diese Dichtungen wird jeweils eine doppelte Absperrung der Gleitflächen des Drehkranzes 1 vom Drehantriebsraum 8 bzw. vom Produktraum 7 erzielt. Der Weg des Maschinenfettes aus dem Drehantriebsraum 8 entlang der oberen Gleitfläche des Drehkranzes 1 wird durch die oberen Dichtungen 11 gesperrt, der Weg zwischen unterer Gleitfläche des Drehkranzes und dem Zahnkranz 10 bzw. der Weg unterhalb des Zahnkranzes 10 über das Wälzlager 3 wird durch die unteren Dichtungen 12 blockiert. Ferner befindet sich bei dieser Ausführungsform zwischen den Dichtungen ein Spülraum 13, in dem eventuell durch die jeweils erste Dichtung hindurchtretendes Schmierfett aufgefangen wird. Dieser Spülraum ist nach außen zugänglich und kann mit entsprechenden Reinigungsbzw. Spülmitteln durchflutet oder durchströmt werden. Bevorzugt ist dieser Raum jedoch über einen Schmiernippel 14 mit einem Lebensmittelfett gefüllt, welches einerseits als Fettbarriere dient und hindurchtretendes Schmierfett auffängt, andererseits aber auch die Dichtungen schmiert, wodurch die Standzeit erhöht wird. Der gelegentliche Austausch des Fettes erfolgt durch Nachpressen von neuem Fett durch den Schmiernippel 14, wodurch das alte Fett aus einem Fettaustritt 15 herausgedrückt wird. Ein entsprechender Kanal verläuft folglich vom Spülraum 13 durch das Trichterunterteil 6 und die sich daran anschließende Halterung zu dem Fettaustritt 15.

Je nach Umfang des Drehkranzes 1 können dabei mehrere Schmieranschlüsse 14 bzw. Fettaustritte 15 über den Umfang verteilt sein.

Die jeweils trichterseitigen oberen und unteren Dichtungen wirken sowohl als zuverlässige Absperrung gegen eventuell eindringende Wurstmasse, als auch als weitere (dritte) Schranke für Fett aus dem Drehantriebsraum bzw. für das im Spülraum 13 vorhandene Lebensmittelfett.

Somit wirken die beiden Spülräume 13 zwischen den oberen und unteren Dichtungen in radialer Richtung als Sperre sowohl gegen den Durchtritt von Wurstbrät in den Maschinenraum als auch gegen den Durchtritt von Schmierfett in den Produktraum, und da das Spülmittel oder das Lebensmittelfett in den Spülräumen überaus bequem ausgetauscht werden kann, ist auch auf Dauer mühelos eine vollständige Abtrennung von Produkt- und Maschinenraum sicherzustellen.

## Patentansprüche

1. Zubringeinrichtung in einem Beschickungsbehälter insbesondere für eine Wurstfüllmaschine mit einer Zubringkurve (2), die an einem Drehkranz (1) befestigt ist, welcher seinerseits in einem Wälzlager (3) gelagert ist und auf der Ober- und Unterseite jeweils eine Dichtung aufweist,
dadurch gekennzeichnet, daß auf der oberen und unteren Stirnfläche des Drehkranzes mindestens jeweils zwei obere (11) und mindestens zwei untere (12) Dichtungen mit radialem Abstand voneinander vorgesehen sind.

2. Zubringeinrichtung nach Anspruch 1,
dadurch gekennzeichnet, daß die oberen Dichtungen (11) in den Drehkranz (1) und die unteren Dichtungen (12) in ein Trichterunterteil (6) eingelassen sind.

3. Zubringeinrichtung nach Anspruch 1 oder 2,
dadurch gekennzeichnet, daß die Dichtungen (11, 12) als Gleitringdichtungen ausgebildet sind.

4. Zubringeinrichtung nach Anspruch 1 oder 2,
dadurch gekennzeichnet, daß die Dichtungen (11, 12) als Lippen-Dichtungen ausgebildet sind.

5. Zubringeinrichtung nach einem der Ansprüche 1 bis 4,
dadurch gekennzeichnet, daß der radiale Zwischenraum zwischen den oberen bzw. unteren Dichtungen (11, 12) jeweils als Spülraum (13) ausgebildet ist.

6. Zubringeinrichtung nach Anspruch 5,
dadurch gekennzeichnet, daß der Spülraum (13) mit Lebensmittelfett als Barriere für das Schmierfett in einem angrenzenden Drehantriebsraum (8) und für die Wurstmasse sowie zum Fetten der Dichtungen (11, 12) gefüllt ist.

7. Zubringeinrichtung nach einem der Ansprüche 5 oder 6,
dadurch gekennzeichnet, daß dem Spülraum (13) ein Schmiernippel (14) und ein Fettaustritt (15) zugeordnet ist.

8. Zubringeinrichtung nach mindestens einem der vorhergehenden Ansprüche,
dadurch gekennzeichnet, daß der Antrieb des Drehkranzes (1) über ein Antriebsritzel (9) und einen in dem Wälzlager (3) gelagerten Zahnkranz (10) erfolgt und der Drehkranz (1) an dem Wälzlager mit Schrauben befestigt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | DE-U-9 105 198 (VEMAG)<br>* das ganze Dokument *<br>--- | 1-8 | A22C11/08<br>F16J15/00 |
| X<br>A | DE-B-1 162 714 (ALEXANDERWERK)<br>* Abbildung 2 *<br>--- | 1<br>2,3,8 | |
| Y | FR-A-1 422 912 (MANUFACTURE DE MACHINES DU HAUT-RHIN)<br>* Seite 2, linke Spalte, Absatz 7; Abbildung *<br>--- | 1,3 | |
| Y<br>A | E. MAYER 'mechanical seals'<br>27. Mai 1974 , ILIFFE BOOKS , LONDON<br>* Seite 173, Absatz 1; Abbildungen 9.2 *<br>--- | 1,3<br>2,5,7 | |
| A | GB-A-2 202 005 (SSP PUMPS LIMITED)<br>* Seite 2, Zeile 14 - Seite 3, Zeile 27 *<br>--- | 1-7 | |
| A | DE-A-2 330 922 (VEB KOMBINAT ASCOBLOC)<br>* Seite 3, letzter Absatz; Anspruch 7; Abbildung *<br>--- | 5 | |
| A | EP-A-0 144 110 (ADANG)<br>* Seite 3, letzter Absatz; Anspruch 1 *<br>--- | 2 | RECHERCHIERTE SACHGEBIETE (Int. Cl.5)<br><br>A22C<br>F16J |
| A | DE-A-1 775 309 (WAESCHLE)<br>* das ganze Dokument *<br>--- | 5,8 | |
| A | GB-A-1 571 342 (FORSHEDA GUMMIFABRIK)<br>* Seite 3, Zeile 8 - Zeile 23; Abbildung *<br><br>----- | 7 | |

Der vorliegende Recherchenbericht wurde für alle Patentansprüche erstellt

| Recherchenort | Abschlußdatum der Recherche | Prüfer |
|---|---|---|
| DEN HAAG | 05 AUGUST 1992 | DE LAMEILLIEURE D. |